# EUROPEAN PATENT APPLICATION

(11) **EP 4 797 405 A1**
(43) Date of publication of application: **26.08.2026**
(21) Application number: 25867315.1
(22) Date of filing: 13.11.2025
(51) Int. Cl.: H01M 50/242, H01M 50/264, H01M 50/342

(54) **CELL ASSEMBLY AND BATTERY PACK INCLUDING SAME**

(30) Priority: 25.11.2024 KR 20240170156
(71) Applicant: LG Energy Solution, Ltd., Seoul, 07335 (KR)
(72) Inventor: LEE, Taekyeong, Yuseong-gu, Daejeon 34122 (KR); KIM, Dayoung, Yuseong-gu, Daejeon 34122 (KR)
(74) Representative: Plasseraud IP
(86) International application number: PCT/KR2025/018757
(87) International publication number: WO 2026/111313

(57) **Abstract**

A cell assembly according to one embodiment of the present invention is characterized by including: a battery cell stack in which a plurality of battery cells are stacked; and a support frame including a bottom frame disposed on a lower side of the battery cell stack and side frames disposed on each side of the bottom frame.

The cell assembly and battery pack according to one embodiment of the present invention have the effect of smoothly discharging gas during thermal runaway while simultaneously securing rigidity against vertical shock or vibration.

## Description

### [TECHNICAL FIELD]

The present invention relates to a cell assembly and a battery pack including the same, and more particularly, to a cell assembly that ensures rigidity against vertical shock or vibration and a battery pack including the same.

### [BACKGROUND ART]

Unlike non-rechargeable primary batteries, secondary batteries are batteries that can be charged and discharged, and they are applied not only to portable devices but also to vehicles driven by an electric drive source, such as electric vehicles (EVs) and hybrid electric vehicles (HEVs).

Types of secondary batteries currently in widespread use include lithium-ion batteries, lithium-polymer batteries, nickel-cadmium batteries, nickel-metal hydride batteries, and nickel-zinc batteries. The operating voltage of such a unit secondary battery cell, that is, a unit battery cell, is about 2.5 V to 4.6 V. Therefore, when a higher output voltage is required, a battery pack is formed by connecting a plurality of battery cells in series. In addition, depending on the charge/discharge capacity required for the battery pack, a plurality of battery cells may be connected in parallel to configure the battery pack. Accordingly, the number of battery cells included in the battery pack may be variously determined depending on the required output voltage or charge/discharge capacity.

When a plurality of battery cells are connected in series and/or in parallel to form a battery pack, it is common to first configure a battery module consisting of at least one, preferably a plurality of battery cell, and then to use at least one such battery module together with additional components to configure the battery pack. Here, a battery module means a component in which a plurality of battery cells are connected in series and/or in parallel, and a battery pack means a component in which a plurality of battery modules are connected in series and/or in parallel to increase capacity and output.

The battery modules that make up these secondary batteries must be able to release gas during thermal runaway, and it is also important to ensure rigidity against vertical shocks or vibrations.

### [SUMMARY OF THE INVENTION]

### [TECHNICAL PROBLEM]

The purpose of the present invention is to provide a cell assembly and a battery pack including the same, which can smoothly discharge gas during thermal runaway while simultaneously securing rigidity against vertical shock or vibration.

### [SOLUTION TO THE PROBLEM]

A cell assembly according to one embodiment of the present invention is characterized by including: a battery cell stack in which a plurality of battery cells are stacked; and a support frame including a bottom frame disposed on a lower side of the battery cell stack and side frames disposed on each side of the bottom frame.

Additionally, the bottom frame includes one or more through-holes.

Additionally, the bottom frame includes a groove disposed on one edge.

Additionally, the groove extends along the longitudinal direction of the battery cell stack.

Additionally, the groove is formed by bending downward from one edge of the bottom frame.

Additionally, the groove is arranged on both edges of the bottom frame.

In addition, the cell assembly according to one embodiment of the present invention further includes a compression pad disposed on the upper side of the bottom frame.

Additionally, the compression pad includes one or more through-holes.

Additionally, the bottom frame includes one or more through-holes, and the through-holes of the bottom frame are in communication with the through-holes of the compression pad.

In addition, it further includes side compression pads arranged on each side of the battery cell stack, and the side compression pads are disposed between the battery cell stack and the side frames.

In addition, the cell assembly according to one embodiment of the present invention further includes one or more bands arranged on the upper portion of the battery cell stack.

Additionally, the band is arranged across the battery cell stack.

Additionally, the band includes a downwardly bent portion at both ends thereof.

Additionally, each of the above-described bent portions is positioned on the outer side of the side frame.

Additionally, a thermally conductive resin is placed on the lower surface of the band.

A battery pack according to one embodiment of the present invention includes one or more cell assemblies; and a pack case for accommodating the cell assemblies.

### [ADVANTAGEOUS EFFECTS OF THE INVENTION]

The cell assembly and battery pack according to one embodiment of the present invention have the effect of smoothly discharging gas during thermal runaway while simultaneously securing rigidity against vertical shock or vibration.

### [BRIEF DESCRIPTION OF DRAWINGS]

FIG. 1 is a perspective view of a cell assembly according to an embodiment of the present invention.
FIG. 2 is an exploded perspective view of the cell assembly according to an embodiment of the present invention.
FIG. 3 is a perspective view of a battery cell in an embodiment of the present invention.
FIG. 4 is a perspective view of the cell assembly of FIG. 1 turned over.
FIG. 5 is a partial cross-sectional view of the cell assembly in FIG. 1 taken in the width direction.
FIG. 6 is a detailed view of part of FIG. 5.
FIG. 7 is a drawing illustrating a battery pack according to an embodiment of the present invention.
FIG. 8 is a perspective view of a vehicle equipped with a battery pack according to one embodiment of the present invention.

### [DETAILED DESCRIPTION OF THE INVENTION]

The advantages and features of the present invention, and the methods of achieving them, will become apparent with reference to the embodiments described in detail below in conjunction with the accompanying drawings. However, the present invention is not limited to the embodiments disclosed below but may be implemented in various other forms; the embodiments are provided merely to ensure a complete disclosure of the present invention and to fully inform those skilled in the art of the scope of the invention. The present invention is defined only by the scope of the claims. Therefore, in some embodiments, well-known process steps, well-known device structures, and well-known technologies are not described in detail so as not to obscure the present invention. Throughout the specification, the same reference numerals refer to the same elements.

In the drawings, the thicknesses of layers and regions may be exaggerated for clarity. Throughout the specification, similar parts are designated by the same reference numerals. When an element such as a layer, film, region, or plate is referred to as being "on" another element, it may be disposed directly on the other element or one or more intervening elements may be present therebetween. Conversely, when a part is referred to as being "directly on" another part, it means that there is no intervening part therebetween. Also, when an element such as a layer, film, region, or plate is referred to as being "under" another element, it may be disposed directly beneath the other element or one or more intervening elements may be present therebetween. Conversely, when a part is referred to as being "directly under" another part, it means that there are no intervening parts.

A cell assembly 1000) according to an embodiment of the present invention will now be described in detail with reference to the accompanying drawings.

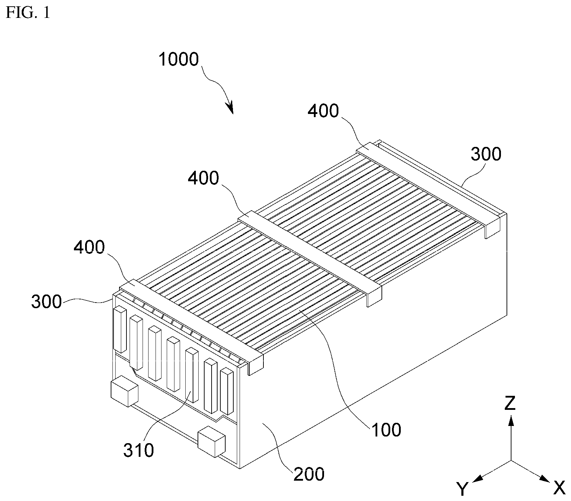

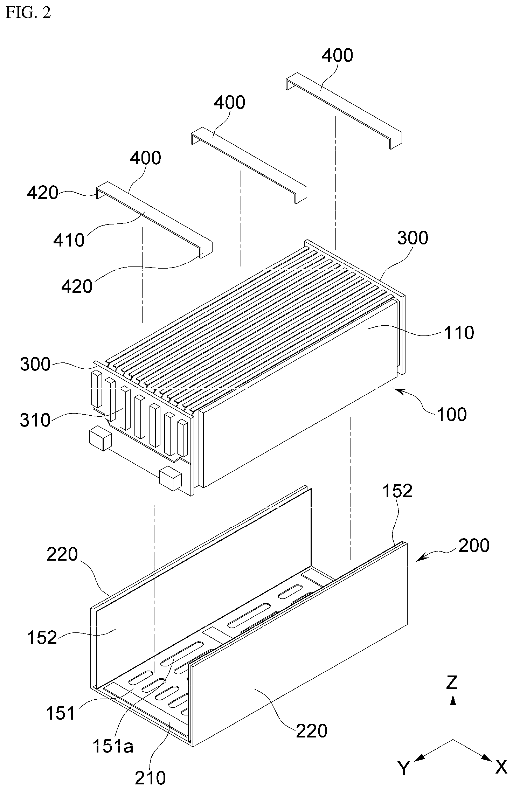

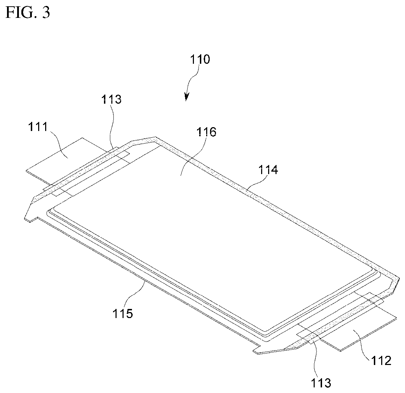

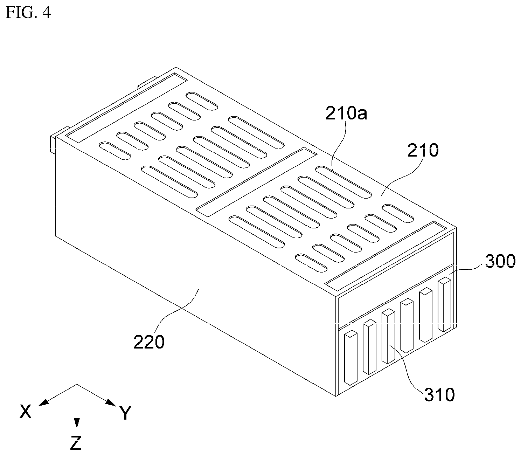

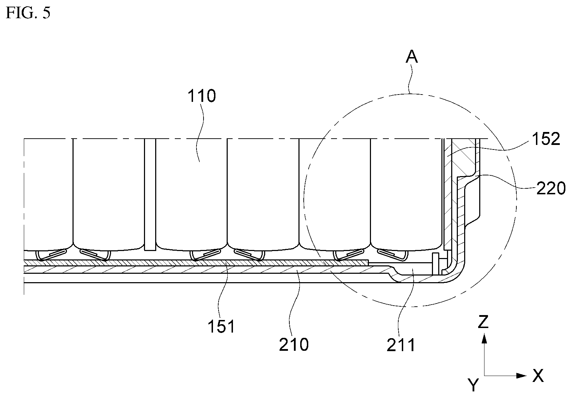

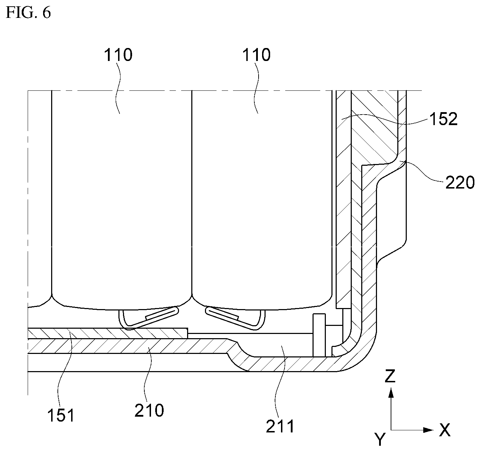

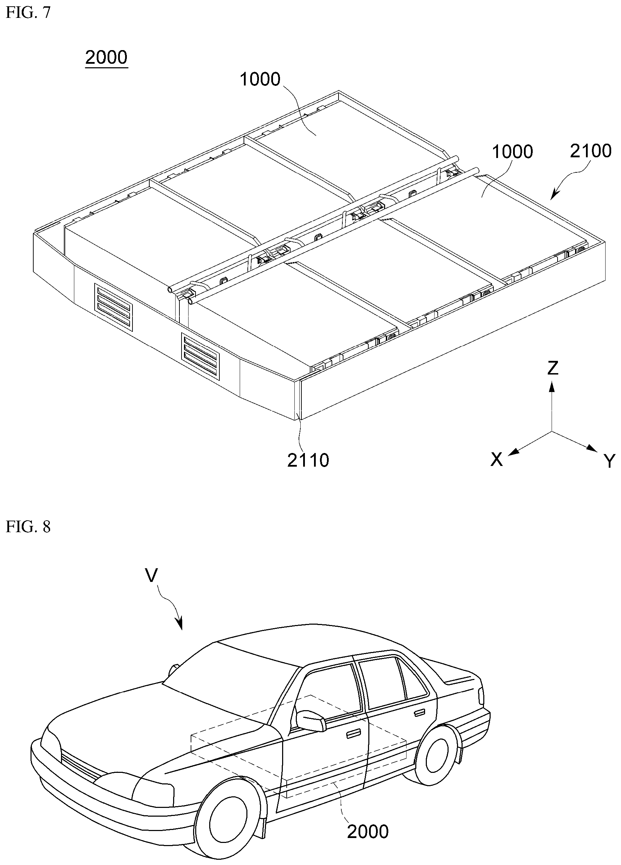

FIG. 1 is a perspective view of a cell assembly according to an embodiment of the present invention, FIG. 2 is an exploded perspective view of a cell assembly according to an embodiment of the present invention, FIG. 3 is a perspective view of a battery cell according to an embodiment of the present invention, FIG. 4 is a perspective view of the cell assembly of FIG. 1 turned over, FIG. 5 is a partial cross-sectional view of the cell assembly in FIG. 1 taken in the width direction, FIG. 6 is a partial detailed view of FIG. 5, FIG. 7 is a drawing illustrating a battery pack according to an embodiment of the present invention, and FIG. 8 is a perspective view of a vehicle equipped with a battery pack according to an embodiment of the present invention.

A cell assembly 1000 according to an embodiment of the present invention may include: a battery cell stack 100 in which a plurality of battery cells 110 are stacked; a support frame 200 configured to support the battery cell stack 100; a busbar frame 300 disposed on one surface and/or the other surface of the battery cell stack 100; and a band 400 disposed on the upper portion of the battery cell stack 100.

The battery cell stack 100 may be formed by stacking a plurality of battery cells 110 along one direction, and the plurality of battery cells 110 may be electrically connected. The direction in which the plurality of battery cells 110 are stacked may be the X-axis direction (or the -X-axis direction) in FIG. 2.

The direction extending from the front surface to the rear surface of the battery cell stack 100, or the opposite direction, may be defined as the longitudinal direction of the battery cell stack 100, which may correspond to the Y-axis direction in the drawings. In addition, the direction extending from the upper surface to the lower surface of the battery cell stack 100, or the opposite direction, may be defined as the width direction of the battery cell stack 100, which may correspond to the Z-axis direction in the drawings.

The longitudinal direction of the battery cell stack 100 may be substantially the same as the longitudinal direction of the battery cells 110. Electrode leads 111, 112 of the battery cells 110 may be positioned on the front and rear surfaces of the battery cell stack 100, and the busbars 310, 320 of the cell assembly 1000 may be disposed proximate to the front and rear surfaces of the battery cell stack 100 to facilitate electrical connection with the electrode leads 111, 112.

The battery cells 110 may be provided as pouch-type battery cells, which make it possible to maximize the number of cells stacked per unit area. However, the battery cells 110 are not necessarily limited to a pouch type and may be provided in various other forms, such as prismatic or cylindrical.

A pouch-type battery cell 110 may include an electrode assembly and a cell case 115 that accommodates the electrode assembly (see FIG. 3).

The cell case 115 of the battery cell 110 is for accommodating the electrode assembly and may be a pouch-type cell case 115. The cell case 115 includes a lower case and an upper case that covers the lower case, and the upper and lower cases may be integrally formed. Further, as shown in FIG. 3, the connecting portion of the upper and lower cases may be configured in a bent and folded structure. Then, as illustrated, the upper case may completely cover the lower case, and a sealing portion 114 may be formed at the periphery.

Both the upper and lower cases may be formed of a laminate structure including an inner cladding layer, a metal layer, and an outer cladding layer. The inner cladding layer is positioned inside the cell case 115 relative to the metal layer. Since it is in direct contact with the electrode assembly, it is required to have insulating properties and resistance to the electrolyte. Furthermore, to ensure sealing from the outside, the sealing portion, where the inner layers are thermally bonded to each other, is required to exhibit excellent thermal bonding strength. The metal layer is positioned between the inner and outer cladding layers and serves as a barrier layer that prevents moisture or various gases from penetrating into the battery from the outside. A preferred material for the metal layer in contact with the inner cladding layer may be a lightweight aluminum (Al) thin film exhibiting excellent formability. The outer cladding layer is positioned on an outer side of the cell case 115 with respect to the metal layer. The outer cladding layer may be formed of a heat-resistant polymer having excellent tensile strength, moisture barrier properties, and air barrier properties so as to protect the electrode assembly while ensuring heat resistance and chemical resistance. For example, nylon or polyethylene terephthalate may be employed.

A receiving groove 116 can be formed in each of the upper and lower cases, and an electrode assembly can be accommodated within the receiving grooves 116 of the upper and lower cases.

The electrode assembly housed in the cell case 115 may be selected from the group consisting of: a jelly-roll type electrode assembly having a structure in which a separator is interposed between elongated sheet-shaped positive and negative electrodes and then wound; a stack-type electrode assembly composed of unit cells in which rectangular positive and negative electrodes are stacked with a separator interposed therebetween; a stack-folding type electrode assembly in which the unit cells are wound by an elongated separator film; and a lamination-stack type electrode assembly in which the unit cells are stacked with a separator interposed therebetween and bonded to each other.

Further, the electrode assembly may include two electrode tabs and two electrode leads 111, 112 respectively connected to these electrode tabs. The two electrode leads 111, 112 can be respectively connected to the electrode tabs by welds.

Of the two electrode leads 111, 112, one electrode lead 111, 112 may be a positive electrode lead connected to a positive electrode tab, and the other electrode lead 111, 112 may be a negative electrode lead connected to a negative electrode tab.

A lead film 113 may be attached to each of the electrode leads 111, 112. The lead film 113 coupled to the electrode leads 111, 112 is disposed between the electrode leads 111, 112 and the cell case 115 to prevent a short circuit from occurring between the electrode leads 111, 112 and the cell case 115 and to improve the sealing force, thereby preventing issues such as the leakage of the electrolyte.

The two electrode leads 111, 112 are illustrated as being arranged on opposite sides of the electrode assembly; however, they may alternatively be arranged on only one side of the electrode assembly depending on the arrangement of the electrode tabs.

The support frame 200 may be for supporting the battery cell stack 100. The support frame 200 may include a bottom frame 210 and side frames 220 arranged on both sides of the bottom frame 210. The support frame 200 can extend along the longitudinal direction Y-axis direction) of the battery cell stack 100 as shown in FIGS. 1 and 2. The upper part of the support frame 200 between the side frames 220 can be open.

The bottom frame 210 may be formed in the shape of a roughly square plate. The battery cell stack 100 is placed on the bottom frame 210 so that the bottom frame 210 can support the lower part of the battery cell stack 100.

As shown in FIG. 4, which is a drawing of the cell assembly 1000 turned over, one or more through-holes 210a may be formed in the bottom frame 210. By forming one or more through-holes 210a in the bottom frame 210 in this way, gas generated from the cell 110 during thermal runaway can be vented to the lower part of the cell assembly 1000. As shown, a plurality of through-holes 210a can be formed in the bottom frame 210, and each through-hole 210a can extend long along the longitudinal direction (Y-axis direction) of the support frame 200 or the battery cell stack 100. A plurality of through-holes 210a may be spaced apart from each other along the longitudinal direction (Y-axis direction) of the support frame 200 or the battery cell stack 100, and may be spaced apart from each other along the width direction (X-axis direction) of the support frame 200 or the battery cell stack 100.

As shown in FIGS. 5 and 6, grooves 211 may be formed on each of the edges of both sides of the bottom frame 210.

The groove 211 can extend along the longitudinal direction (Y-axis direction) of the bottom frame 210 or the battery cell stack 100 from both edges of the bottom frame 210, and can be formed for the entire length (Y-axis direction) of the bottom frame 210.

The groove 211 can be formed concavely by being bent downward from both edges of the bottom frame 210, and can be formed concavely by being bent downward from the entire thickness of the edge of the bottom frame 210. Therefore, the height of the bottom frame 210 portion between the two grooves 211 can be higher than the grooves 211 (Z-axis direction). The groove 211 can be formed, for example, by pressing.

In this way, by forming a concave groove 211 bent downward on both sides of the bottom frame 210, gas can be vented through the groove 211 during thermal runaway. In addition, by forming an integrally bent groove 211 on both sides of the bottom frame 210, it is possible to ensure rigidity against vibration and shock in the vertical direction (Z-axis direction).

The side frames 220 may be disposed on each side of the bottom frame 210. The side frames 220 are disposed on both sides of the bottom frame 210 to support both sides of the battery cell stack 100. The side frame 220 may extend along the longitudinal direction (Y-axis direction) of the bottom frame 210 and the battery cell stack 100.

The side frame 220 may be formed integrally with the bottom frame 210, and the support frame 200 may form a U-shaped frame. Additionally, the side frame 220 may be coupled to both sides of the bottom frame 210 by welding or the like. The support frame 200 may be formed in a form with an open upper portion.

The material of the support frame 200 may be made of metal or steel, or the like.

The support frame 200 may be provided in a form that is open along the longitudinal direction of the battery cell stack 100. The front surface and the rear surface of the battery cell stack 100 may not be covered by the support frame 200. The electrode leads 111, 112 of the battery cells 110 may not be covered by the support frame 200.

A compression pad 151, 152 may be disposed on the inside of the support frame 200. A compression pad 151 may be disposed on the bottom frame 210 of the support frame 200, and side compression pads 152 may be disposed on the inside of each of the side frames 220. Accordingly, a compression pad 151 may be disposed between the bottom frame 210 and the lower portion of the battery cell stack 100, and a side compression pad 152 may be disposed between the side frame 220 and the side of the battery cell stack 100.

In this way, by disposing the compression pads 151, 152 on the inside of the support frame 200, the battery cell 110 that expands and contracts repeatedly according to charging and discharging may be smoothly supported. In addition, a compression pad 151 is disposed on the bottom frame 210 and a battery cell 110 is disposed on the compression pad 151, thereby mitigating shock and vibration in the vertical direction (Z-axis direction).

One or more through-holes 151a may be formed in the compression pad 151 disposed on the bottom frame 210. As illustrated, a plurality of through-holes 151a may be formed in the compression pad 151, and each through-hole 151a may extend in the longitudinal direction

(Y-axis direction) of the compression pad 151 or the battery cell stack 100. A plurality of through-holes 151a may be spaced apart from each other along the longitudinal direction (Y-axis direction) of the compression pad 151 or the battery cell stack 100, and may be spaced apart from each other along the width direction (X-axis direction) of the compression pad 151 or the battery cell stack 100.

By forming one or more through-holes 151a in the compression pad 151, gas may be vented from the battery cell 110 to the lower part of the cell assembly 1000 during thermal runaway. The through-hole 151a of the compression pad 151 may communicate with the through-hole 210a of the bottom frame 210, and may overlap each other on a plane.

The compression pads 151, 152 may be compressed and may be restored by elasticity.

The band 400 may be disposed on top of the battery cell stack 100 to support the battery cell stack 100. A plurality of bands 400 may be spaced apart and disposed along the longitudinal direction of the battery cell stack 100. Each band 400 may extend in the width direction of the battery cell stack 100 and may be disposed across the battery cell stack 100. The band 400 may be disposed orthogonal to the longitudinal direction of each battery cell 110 and may include a band body 410 and bent portions 420 at both ends of the band body 410.

The band body 410 may be disposed across the upper side of the battery cell stack 100.

The bent portion 420 may be formed by bending downwards at both ends of the band 400 and may be formed integrally with the band body 410.

Both bent portions 420 may be disposed on the upper portions of both outer surfaces of the battery cell stack 100, and in this embodiment, may be disposed on the outer side of both side frames 220. The bent portion 420 may be coupled by welding to the outside of the side frame 220.

In this way, the band 400 is disposed on top of the battery cell stack 100 to support the battery cell stack 100, thereby securing rigidity against swelling of the battery cell 110 and securing rigidity against vibration and shock.

A thermally conductive resin (thermal resin) may be disposed between the battery cell stack 100 and the lower side of the band 400. Specifically, a thermally conductive resin may be applied to the lower surface of the band body 410. After a thermally conductive resin is applied to the lower surface of the band 400 or the band body 410, the thermally conductive resin is cured while the band 400 is coupled to the support frame 200, so that the band 400 may be fixed to the battery cell stack 100. Therefore, in this embodiment, the thermally conductive resin on the lower surface of the band body 410 may facilitate heat transfer to the upper portion of the battery cell stack 100 and may also function to fix the upper portion of the battery cell stack 100 and fix the band 400 to the upper portion of the battery cell stack 100. The band 400 may be made of metal, steel, or the like, or may be made of synthetic resin or the like.

The busbar frame 300 is disposed on one surface of the battery cell stack 100 and may cover the one surface of the battery cell stack 100 while guiding electrical connection between the battery cell stack 100 and an external device. Specifically, the busbar frame 300, as illustrated, may be disposed on a front surface or a rear surface of the battery cell stack 100, and may alternatively be disposed on an upper surface, a lower surface, or a side surface. At least one of busbars 310 and a module connector may be mounted on the busbar frame 300. As illustrated, one surface of the busbar frame 300 is coupled to one surface or the opposite surface of the battery cell stack 100, and the other surface of the busbar frame 300 may be coupled to the busbars 310, 320.

The busbar frame 300 may include an electrically insulating material. The busbar frame 300 may restrict the busbars 310 from contacting portions of the battery cells 110 other than the portions joined to the electrode leads 111, 112, thereby preventing occurrence of a short circuit.

The busbar frame 300 may be disposed on one side and the other side of the battery cell stack 100, respectively.

The busbars 310 are mounted on one surface of the busbar frame 300 and may serve to electrically connect the battery cell stack 100 or the battery cells 110 to an external circuit of a device. A plurality of busbars 310 may be disposed and spaced apart along the width direction (X-axis direction) of the battery cell stack 100.

The busbars 310 may be electrically connected to the battery cell stack 100 via the electrode leads 111, 112 of the battery cells 110.

Specifically, the electrode leads 111, 112 of the battery cells 110 may be bent and connected to the busbars 310 after passing through a lead slit formed in the busbar frame 300. The battery cells 110 constituting the battery cell stack 100 may be connected in series or in parallel through the busbars 310.

The busbar 310 may include a terminal busbar 310 configured to electrically connect one cell assembly 100 to another cell assembly 100. At least a portion of the terminal busbar 310 may be exposed to the outside to be connected to another cell assembly 100.

One or more cell assemblies 1000 according to the present invention as described above may form a battery pack 2000. As illustrated in FIG. 7, a battery pack 2000 according to an embodiment of the present invention may accommodate one or more cell assemblies 1000 in a pack case 2100, and may further comprise various control and protection systems, such as a BMS (Battery Management System) and a cooling system.

The pack case 2100 may include a lower housing 2110 and an upper housing (not illustrated) coupled to an upper side of the lower housing 2110, and a plurality of cell assemblies 1000 may be accommodated within an internal space formed by the lower housing 2110 and the upper housing. A plurality of cell assemblies 1000 may be seated and supported on the bottom plate of the lower housing 2110. The bottom plate of the lower housing 2110 may include a cooling passage through which the refrigerant moves. The cell assemblies 1000 may be cooled by including a cooling passage in the bottom plate of the lower housing 2110. Additionally, the bottom plate of the lower housing 2110 may include at least one venting hole for gas venting.

A plurality of cell assemblies 1000 may be directly housed in a pack case 2100 to form a Cell-To-Pack configuration. In the present invention, the battery pack 2000 is in the form of a cell-to-pack, and the cell assembly 1000 includes a support frame 200 with an open upper portion, thereby ensuring rigidity and maintaining lower venting while being resistant to vertical shock and vibration.

The cell assembly 1000 and the battery pack 2000 according to the present invention configured as described above may be applied to various devices. Specifically, the present invention may be applied to vehicles such as electric bicycles, electric vehicles (V), and hybrid vehicles, or to an Energy Storage System (ESS), but is not limited thereto, and may also be applied to various devices capable of using secondary batteries.

FIG. 8 is a view illustrating an electric vehicle (V) equipped with the battery pack 2000. In the electric vehicle (V), the wheels are driven by a motor powered by the battery pack 2000, whereby the electric vehicle can be operated.

While the present invention has been described with reference to preferred embodiments, it is not limited to the embodiments described above, and various changes and modifications may be made by those skilled in the art without departing from the spirit of the invention.

### [INDUATRIAL APPLICABILITY]

The present invention can provide a cell assembly and a battery pack including the same, which can smoothly discharge gas during thermal runaway while simultaneously securing rigidity against vertical shock or vibration.

## Claims

1. A cell assembly comprising: a battery cell stack in which a plurality of battery cells are stacked; and
a support frame including a bottom frame disposed on a lower side of the battery cell stack and side frames disposed
on each side of the bottom frame.

2. The cell assembly of claim 1, wherein
the bottom frame includes one or more through-holes.

3. The cell assembly of claim 1, wherein
the bottom frame includes a groove disposed on one edge.

4. The cell assembly of claim 3, wherein
the groove extends along a longitudinal direction of the battery cell stack.

5. The cell assembly of claim 4, wherein
the groove is formed by being bent downward from one edge of the bottom frame.

6. The cell assembly of claim 4, wherein
the groove is disposed on both edges of the bottom frame.

7. The cell assembly of claim 1, further comprising
a compression pad disposed on the bottom frame.

8. The cell assembly of claim 7, wherein
the compression pad includes one or more through-holes.

9. The cell assembly of claim 8, wherein
the bottom frame includes one or more through-holes, and
the through-holes of the bottom frame communicate with the through-holes of the compression pad.

10. The cell assembly of claim 7, further comprising
side compression pads disposed on both sides of the battery cell stack, wherein
the side compression pads are disposed between the battery cell stack and the side frames.

11. The cell assembly of claim 1, further comprising
one or more bands disposed on an upper portion of the battery cell stack.

12. The cell assembly of claim 11, wherein
the band is disposed across the battery cell stack.

13. The cell assembly of claim 12, wherein
the band includes bent portions bent downward at both ends thereof.

14. The cell assembly of claim 13, wherein
each of the bent portions is disposed on an outer side of the side frame.

15. The cell assembly of claim 11, wherein
a thermally conductive resin is disposed on a lower surface of the band.

16. A battery pack comprising: one or more cell assemblies according to claim 1; and
a pack case configured to accommodate the one or more cell assemblies.
